# EUROPEAN PATENT SPECIFICATION

(11) **EP 3 624 917 B1**
(45) Date of publication and mention of the grant of the patent: **24.04.2024**
(21) Application number: 18724984.2
(22) Date of filing: 30.04.2018
(51) Int. Cl.: B01D 21/34, C02F 1/40, C02F 101/32, B01D 21/00, C02F 1/00, B01D 21/02, B01D 21/24

(54) **A WASTEWATER TREATMENT DEVICE**
ABWASSERBEHANDLUNGSVORRICHTUNG
DISPOSITIF DE TRAITEMENT DES EAUX USÉES

(30) Priority: 15.05.2017 US 201762506280 P
(43) Date of publication of application: 25.03.2020
(73) Proprietor: Hydro International Limited, Clevedon BS21 7RD (GB)
(72) Inventor: MURPHY, Glenn, Scarborough, Maine 04074 (US); ANASTASIO, Andrew Scott, Portland, Maine 04103 (US)
(74) Representative: Haseltine Lake Kempner LLP
(86) International application number: PCT/GB2018/051145
(87) International publication number: WO 2018/211238

(56) References cited:
- WO-A1-2011/100096
- WO-A1-2013/171652
- FR-A5- 2 105 515
- US-A- 1 177 849

## Description

This invention relates to a wastewater treatment device.

Wastewater such as that arriving at a sewage treatment facility can contain, among other things, fat, oil, grease and grit (FOGG) which may damage processing equipment and lead to a loss of performance.

A separator for the removal of grit from wastewater flow is described in US6645382. The separator comprises a tray assembly made up of a plurality of stacked settling plates, in the form of trays having a frusto-conical shape. Each tray has a centrally located opening and a lip which extends about the periphery of the tray and projects inwardly. The trays are spaced apart axially so that wastewater may flow between the trays. The stacked trays are submerged in a vessel, such as a grit basin. An influent duct channels wastewater in between the trays and ensures that the wastewater is distributed evenly across the tray stack. The influent duct is arranged to provide a tangential inlet such that a low energy vortex flow is established between adjacent trays. The low energy vortex allows grit particles entrained by the flow to settle on the sloping inner surface of each tray whereupon the particles gravitate towards and pass through the openings in the trays. The grit falls through the openings in underlying trays and out through the bottom of the tray assembly. The grit collects at the bottom of the separator from where it is removed as a concentrate. De-gritted wastewater flows out over the lips of the trays into the grit basin for further processing.

However, operating and maintaining the separator is a difficult, expensive, time-consuming and resource-intensive process. It is therefore desirable to provide a wastewater treatment device which is easier to operate and maintain.

WO 2011/100096 A1 describes a compact and portable liquid concentrator and contaminant scrubber including a gas inlet, a gas exit and a flow corridor connecting the gas inlet and the gas exit. The flow corridor includes a narrowed portion that accelerates the gas through the flow corridor. A liquid inlet injects liquid into the gas stream at a point prior to the narrowed portion so that the gas-liquid mixture is thoroughly mixed within the flow corridor, causing a portion of the liquid to be evaporated. A demister or fluid scrubber downstream of the narrowed portion removes entrained liquid droplets from the gas stream and re-circulates the removed liquid to the liquid inlet through a re-circulating circuit. A reagent may be mixed with the liquid to react with contaminants in the liquid.

In accordance with an aspect of the invention, there is provided a wastewater treatment device comprising: a vessel comprising an inlet for receiving an influent stream; a separator disposed within the vessel; a grit pot connected to the separator; a level sensor; one or more fluidizing nozzles; an extraction outlet; and a controller. The level sensor is configured to output a signal indicative of the level of grit within the grit pot. The one or more fluidizing nozzles are disposed within the grit pot and configured to deliver a jet of fluid from a fluid supply to fluidize grit accumulated on the lower surface of the grit pot. The extraction outlet is connected to a pump for extracting grit fluidized by the fluidizing nozzles. The controller is in communication with the level sensor. The controller is configured to activate the fluidizing nozzles and the pump based on the signal received from the level sensor.

The controller is configured to activate the fluidizing nozzles when the signal is indicative of the level of grit within the grit pot being above a first predetermined threshold level.

The controller may be configured to activate the pump after a predetermined period of time has elapsed from activating the fluidizing nozzles.

The controller may be configured to deactivate the fluidizing nozzles and/or the pump when the signal is indicative of the level of grit within the grit pot being below a second predetermined threshold level.

The level sensor and/or the extraction outlet may be disposed within the grit pot.

A plurality of fluidizing nozzles may be provided which may be spaced around a circumference of the grit pot.

The plurality of fluidizing nozzles may be connected to a ring manifold.

The fluidizing nozzles may be directed towards a centre of the grit pot.

The fluidizing nozzles may be angled towards a lower surface of the grit pot.

The or each fluidizing nozzle may be a flat-fan fluidizing nozzle.

The extraction outlet may be located at or adjacent a centre of the grit pot and above a lower surface of the grit pot.

The separator may comprise a tray assembly connected to the inlet. The tray assembly may comprise a plurality of nested tray units which define a separator axis and are spaced apart from one another along the separator axis. Each tray unit may comprise: a substantially conical tray which is aligned along the separator axis; and an aperture in the tray disposed at the separator axis and in communication with the grit pot.

For a better understanding of the present invention, and to show more clearly how it may be carried into effect, reference will now be made, by way of example, to the accompanying drawings, in which:
Figure 1 is a perspective sectional view of a separator according to an embodiment of the invention;
Figure 2 is a sectional view of the separator shown in Figure 1;
Figure 3 is a sectional view of the separator shown in Figure 1 taken in a direction perpendicular to that of Figure 2;
Figure 4 is a close-up sectional view of a grit pot of the separator shown in Figure 1;
Figure 5 is a sectional plan view of the grit pot of Figure 4;
Figure 6 is a close-up plan view of a nozzle shown in Figure 5;
Figure 7 is a close-up sectional view of a nozzle of the grit pot of Figure 4;
Figure 8 is a perspective view of a first mechanism for removing a level sensor;
Figure 9 is a perspective view of a second mechanism for removing the level sensor; and
Figure 10 is a perspective semi-transparent view of a separator according to another embodiment of the invention.

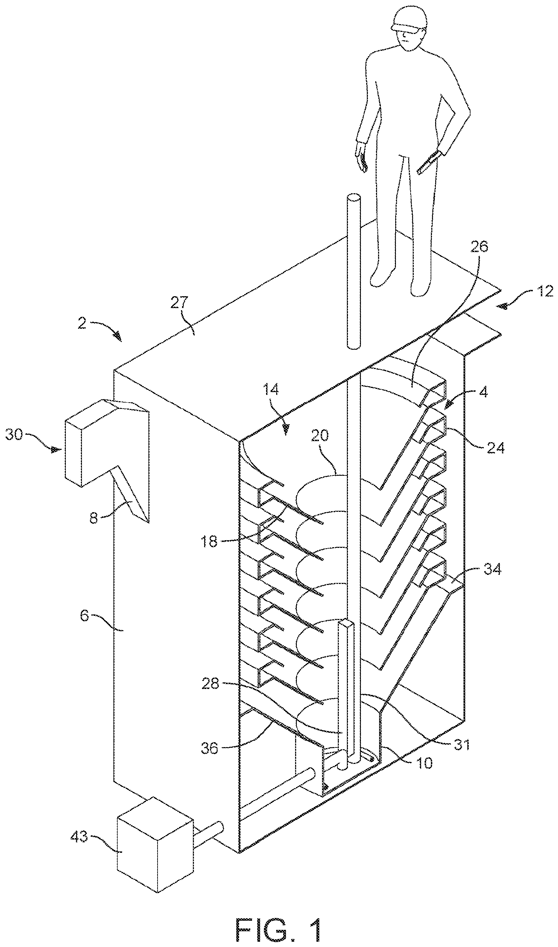

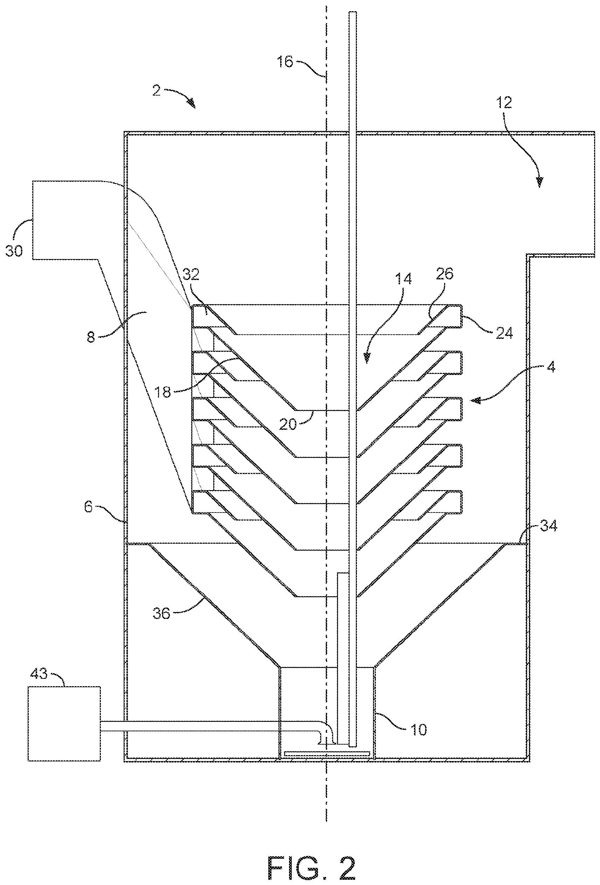

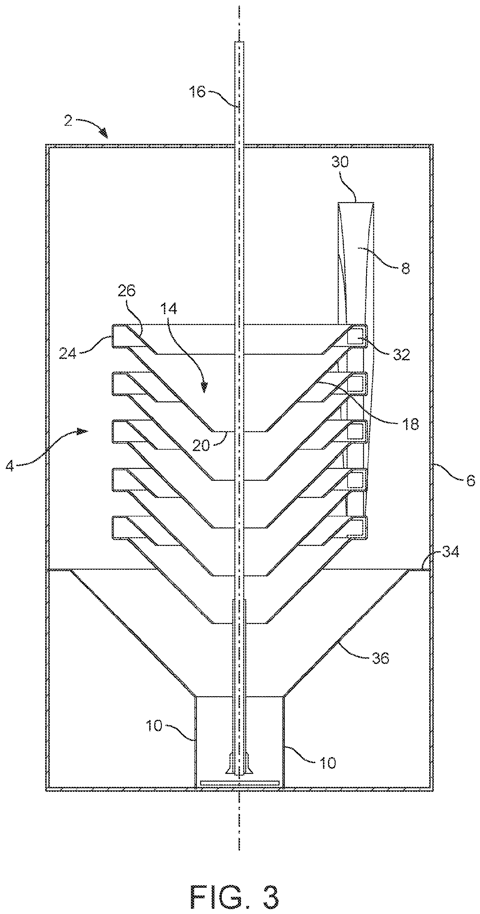

**Figure 1** shows a separator 2 comprising a tray assembly 4 disposed within a treatment vessel 6. The tray assembly 4 comprises a plurality of nested tray units 14. Five tray units 14 are shown in Figure 1, but it will be appreciated that the tray assembly could comprise more or fewer tray units 14. The nested tray units 14 define a separator axis 16, shown in Figures 2 and 3, which is upright and preferably vertical.

The tray units 14 are spaced apart from each other along the axis 16. The treatment vessel 6 is provided with an inlet chute 8 and a fluids outlet 12.

Each tray unit 14 comprises a frusto-conical tray 18, having a circular aperture 20 at the apex of the tray 18. The axis of the conical shape of the tray 18 is aligned with the separator axis 16. The tray 18 converges in a downward direction. A cylindrical rim 24 extends upwardly from the outer periphery of the tray 18 and an annular lip 26 extends radially inwardly from the extremity of the rim 24. The radially inward portion of the annular lip 26 is inclined so as to be parallel to the direction of the upper surface of the tray 18. The rim 24 and annular lip 26 may be formed integrally with the tray 18 by a folded over portion of the tray 18. The rim 24 and annular lip 26 can be separately manufactured and assembled with the tray 18, or can be formed integrally with the tray 18, for example, when the tray is a plastics moulding.

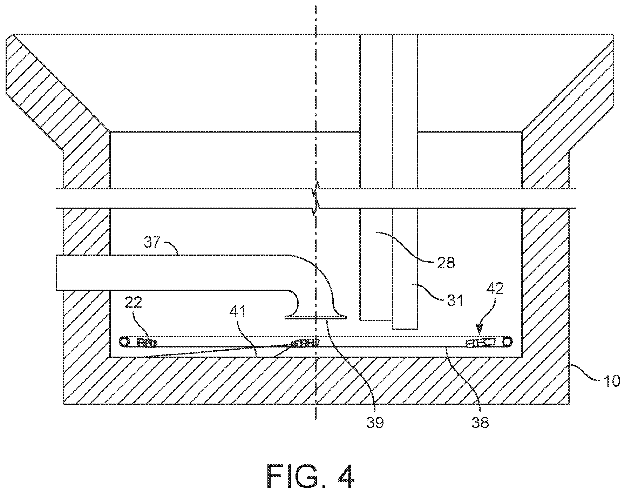

Referring to **Figures 2** **and** **3****,** the inlet chute 8 has a single inlet 30 and a plurality of outlets 32. The chute 8 extends into the treatment vessel 6 through an outer wall of the treatment vessel 6 and is in direct communication with the tray assembly 4. The mid-portion of the chute 8 is inclined in a downward direction from the inlet 30 to the outlets 32. The mid-portion of the chute 8 diverges in a vertical direction from the inlet 30 towards the outlets 32. The outlets 32 are aligned vertically and extend from the lower end of the mid-portion of the chute in a horizontal direction. Each of the outlets 32 is in direct communication with a respective tray unit 14 and arranged tangentially with respect to the separator axis 16 (shown in Figures 3 and 4). In particular, the outlets 32 are in direct communication with the region between the annular lip 26 and the upper surface of the tray 18.

A plate 34, provided with a funnel section 36, is disposed within the base of the treatment vessel 6. The plate 34 extends horizontally across the extent of the vessel 6 and the funnel section 36 converges in a downward direction. A grit pot 10 is provided in the lower region of the funnel section 36 and forms a sump for collecting grit at the base of the vessel 6. The funnel section 36 is arranged coaxially with the separator axis 16.

As shown best in **Figure 4****,** an extraction tube 37 extends through a wall of the grit pot 10 into the interior of the grit pot 10. The end of the extraction tube 37 has a bell mouth opening which increases in diameter towards its distal end and which forms a grit outlet 39 for extracting grit from the grit pot 10. The extraction tube 37 extends horizontally through the wall of the grit pot 10 and has a corner section adjacent the grit outlet 39 which transitions from horizontal to vertical such that the grit outlet 39 is directed downwards towards a lower surface 41 of the grit pot 10. The grit outlet 39 is positioned at the centre of the grit pot 10 at the separator axis 16. As shown in Figure 1, the other end of the extraction tube 37 is connected to a pump 43 which provides a suction force at the grit outlet 39 to remove grit from the grit pot 10.

A level sensor 28 is disposed within the grit pot 10 adjacent the centre of the grit pot 10 and the separator axis 16. The level sensor 28 is supported by a support 31 which passes through an upper surface 27 of the separator 2, and extends downwards through the circular apertures 20 and into the grit pot 10. The level sensor 28 is configured to output a signal which is representative of the level of grit within the grit pot 10.

A fluidizing apparatus 42 is disposed within the grit pot 10 and spaced from the lower surface 41 of the grit pot 10. The fluidizing apparatus 42 comprises a plurality of fluidizing nozzles 22 (also referred to as spray nozzles) which are spaced around an inner surface of a ring manifold 38.

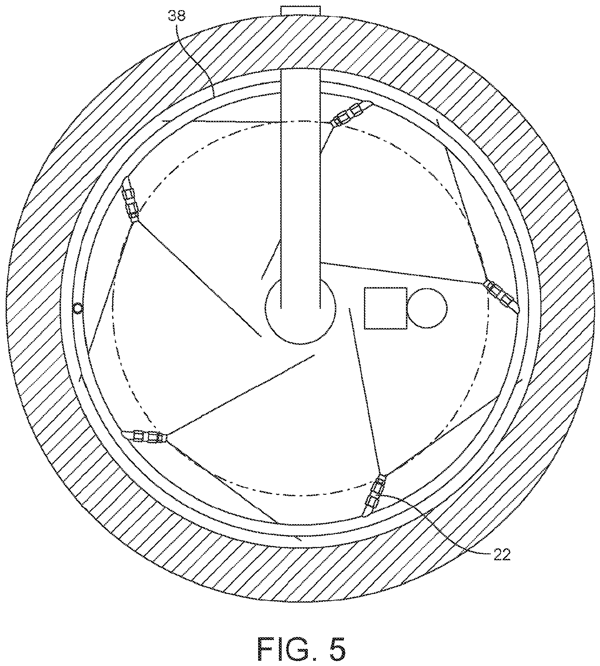

As shown in **Figure 5****,** the ring manifold 38 is formed by a pipe which is formed into a circle having a diameter which is less than that of an inner surface of the grit pot 10. The ring manifold 38 thus extends around a periphery of the interior of the grit pot 10. The manifold 38 carries five fluidizing nozzles 22, which are equally spaced around the circumference of the manifold 38. The fluidizing nozzles 22 extend inwards from the manifold 38 towards the centre of the manifold 38. The fluidizing nozzles 22 are flat-fan nozzles which have a spray angle of approximately 65 degrees.

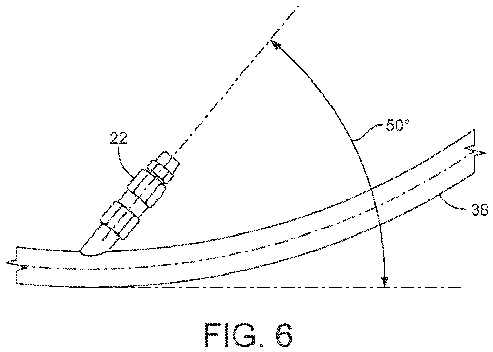

As shown in **Figure 6****,** the fluidizing nozzles are angled in the same direction at approximately 50 degrees from the tangent of the manifold 38.

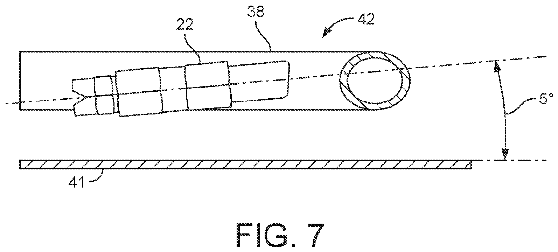

Further, as shown in **Figure 7****,** the fluidizing nozzles 22 are angled downwards, towards the lower surface 41 of the grit pot 10 at an angle of approximately 5 degrees.

The manifold 38 is connected to a fluid supply and distributes the fluid to the fluidizing nozzles 22 when in use. The fluid may be a liquid, such as water, or a gas, such as air. The fluid supply may be connected to the manifold 38 via a solenoid valve (not shown), which allows the fluidizing nozzles 22 to be selectively actuated. Each fluidizing nozzle 22 may instead have its own dedicated fluid supply.

The output from the level sensor 28 is supplied to a controller (not shown). The controller is in communication with the pump 43 and the solenoid valve of the fluidizing apparatus 42. As described in further detail below, the controller is configured to activate and deactivate the extraction pump 43 and the fluidizing apparatus based on the level of grit in the grit pot 10 as indicated by the output of the level sensor 28.

The separator 2 may be part of a waste water treatment installation, and its function may be to separate fat, oil, grease and grit from a flow of waste water prior to further treatment processes.

During use, the treatment vessel 6 is flooded so that the tray assembly 4 is submerged. An influent mixture containing grit and grease entrained by water is supplied though the chute inlet 30 and flows downwardly along the chute 8 and through the outlets 32 into respective tray units 14. The tangential arrangement of the outlets 32 causes the mixture to circulate within the tray units 14 about the separator axis 16.

The circulating flow is a relatively low energy flow which allows the entrained grit to settle on the upper surfaces of the trays 18. The sloped upper surface of each tray 18 causes the grit to gravitate towards the aperture 20 in the tray 18. The grit falls through the aperture 20. The grit settles on the upper surface of the underlying tray 18 and gravitates towards and through the aperture 20 of the underlying tray 18. The grit passes through the apertures 20 of the underlying trays 18 until it is expelled from the bottom of the tray assembly 4, where it is collected by the funnel section 36 and fed into the grit pot 10.

The water from which grit is removed circulates within the tray units 14. As the de-gritted water circulates within each tray unit 14 it flows upwardly over the annular lip 26 and over the rim 24 into the outer region of the treatment vessel 6. The annular lips 26 thus help to retain grit which has collected on the surface of each tray 18 within the tray units 14. De-gritted water which collects in the vessel 6 overflows through the outlet 12 which forms an overflow weir.

The level sensor 28 outputs a signal representative of the level of grit within the grit pot 10 to the controller. The controller uses the signal to determine whether the level of grit within the grit pot 10 exceeds a first predetermined value. If the level of grit within the grit pot 10 is determined to exceed the first predetermined value, the fluidizing nozzles 22 are activated by the controller by activating the solenoid valve. This fluidizes the grit that has collected within the grit pot 10. As described previously, the plurality of fluidizing nozzles 22 are angled towards the centre of the manifold and downwards towards the lower surface of the grit pot 10. Consequently, the fluidizing apparatus creates a circulating flow within the grit pot 10 which acts to move grit towards the centre of the grit pot 10 and the location of the grit outlet 39. The angle of the fluidizing nozzles 22 and their spray (fan) angle is selected to ensure that the fluid can fluidize grit collected on the entire lower surface of the grit pot 10. The type, location and orientation of the nozzles 22 enables them to effectively mobilise material whilst minimizing water (or other fluid) usage. Since the arrangement of nozzles 22 provides an evenly distributed flow, the creation of tunnels through the material and pockets of grit that cannot be evacuated are avoided. This allows the system to be effectively used with large grit pots.

The controller may activate the pump 43 after a predetermined period of time following the activation of the fluidizing apparatus 42. As mentioned previously, when the pump 43 is activated, it provides a suction force at the grit outlet 39. This causes the fluidized grit contained within the grit pot 10 to be sucked out of the grit pot 10, through the grit outlet 39 and along the extraction tube 37, thus evacuating the grit pot 10 of fluidized grit.

The level sensor 28 continues to output a signal representative of the level of grit within the grit pot 10 to the control system. When the level of grit within the grit pot 10 is determined to be below a second predetermined level, the fluidizing apparatus 42 and the pump 43 are deactivated by the controller. As the fluidizing apparatus 42 is only activated intermittently, the amount of water (or other fluid) required is minimised. Similarly, intermittent use of the pump 43 reduces the energy required to power the system (e.g. in operating a compressor). The fluidizing apparatus 42 and pump 43 may be deactivated at different times and one or both may be deactivated after a predetermined period of time rather than based on the level of grit sensed by the level sensor 28.

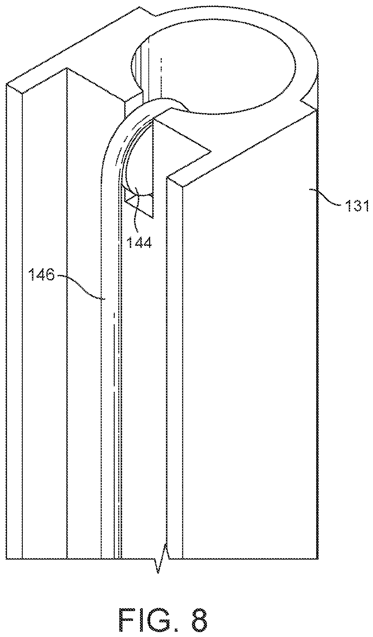

**Figure** 8 shows a first mechanism which may be used to withdraw the level sensor (not shown in this figure) from the treatment vessel 6 of the separator 2. The mechanism comprises a hollow strut 131, a pulley 144, a cable 146 and an actuator (such as a motor, not shown). The hollow strut 131 forms an enclosed channel. The hollow strut 131 replaces the support 31 and, as per the support 31, passes through an upper surface 27 of the separator 2, downwards through the circular apertures 20 and into the grit pot 10. The cable 146 loops over the pulley 144 and extends down the enclosed channel of the hollow strut 131. The sensor is attached to the end of the cable 146 disposed within the hollow strut 131. The other end of the cable 146 is attached to the actuator, which is able draw in or release the other end of the cable 146. Accordingly, the actuator can be controlled so as to adjust the length of the cable 146 extending through the hollow strut 131, and thus the height of the sensor within the treatment vessel 6.

The actuator of the mechanism may therefore be controlled to deploy the sensor to an operating position, where it is positioned at a lower end of the hollow strut 131, close to the lower surface of the grit pot 10. In this position, the sensor is able to output a signal representative of the level of grit within the grit pot 10. The actuator may also be used to withdraw the sensor for maintenance, repair or any other purpose. In particular, the sensor may be drawn out of the upper end of the hollow strut 131 so as to provide access to the sensor. The mechanism may be configured such that the operating position is maintained consistently each time the sensor is withdrawn and deployed. This may be achieved by defining a stop position of the cable 146, which may be a physical stop or visual indicator or other means.

In other embodiments, the strut 131 may form an open channel. For example, the strut may have a C-shaped or U-shaped profile along which the level sensor is movable.

In other embodiments, the actuator may be dispensed with and the cable 146 may be actuated manually so as to manually move the sensor from the operating position to the maintenance position.

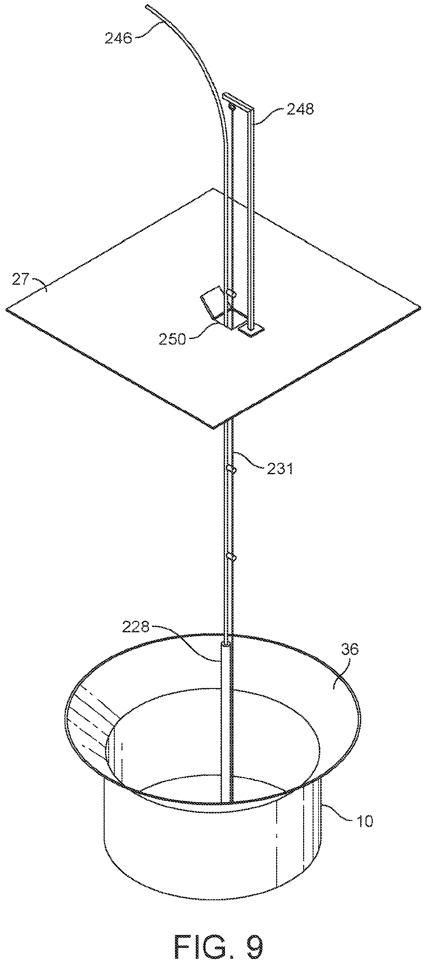

**Figure 9** shows a second mechanism which may be used to withdraw the level sensor (numbered as 228 here). The second mechanism generally comprises a guide cable 231 and a flexible rod 246. An upper end of the guide cable 231 is attached to a support 248 fixed to the upper surface 27 of the separator 2. The lower end of the guide cable 231 is attached to the lower surface (not shown) of the grit pot 10. The upper surface 27 of the separator 2 is provided with an opening 250 through which the guide cable 231 extends, and which is sufficiently large to allow the flexible rod 246 and sensor 229 to pass through. The sensor 228 is slidably connected to the guide cable 231 such that it is able to move from a lower position in which the sensor 228 is positioned close to the lower surface of the grit pot 10, and an upper position in which the sensor 229 is positioned above the upper surface 27 of the separator 2.

In use, the user may wish to deploy the sensor 228 to an operating position by pushing the sensor 228 along the guide cable 231 using the flexible rod 246 until the sensor 228 is positioned at a lower end of the guide cable 231, close to the lower surface of the grit pot 10. In this position, the sensor 228 is able to output a signal representative of the level of grit within the grit pot 10. The sensor 228 can be subsequently retracted by pulling the sensor 228 from the operating position along the guide cable 231 using the flexible rod 246, such that the sensor 228 is drawn out of the treatment vessel 6 through the opening 250. In this position, the user is able to access the sensor 229 for maintenance.

Although it has been described that the sensor 229 is slidably connected to the guide cable 231, in other embodiments, the guide cable 231 could be replaced by a tube or other conduit for the sensor 229 to pass along, as per the arrangement of Figure 8.

The user may decide himself when to carry out maintenance on the level sensor. Alternatively, the user may be prompted by the separator 2 when it is necessary to carry out maintenance. For example, the level sensor could prompt the user to maintain the level sensor after a period of time has elapsed since the last maintenance event or based on the number of extraction (fluidizing) cycles performed or the amount of grit removed. This information may be provided by the controller.

It will be appreciated that the number and arrangement of fluidizing nozzles 22 may differ from that shown and described above. In particular, the number, position and orientation of the fluidizing nozzles 22 may be chosen based on the size of the grit pot 10. In some arrangements, it may be desirable for the jets from the nozzles 22 to overlap. For smaller grit pots 10, a single fluidizing nozzle 22 may be sufficient to fluidize grit collected on the entire lower surface of the grit pot 10.

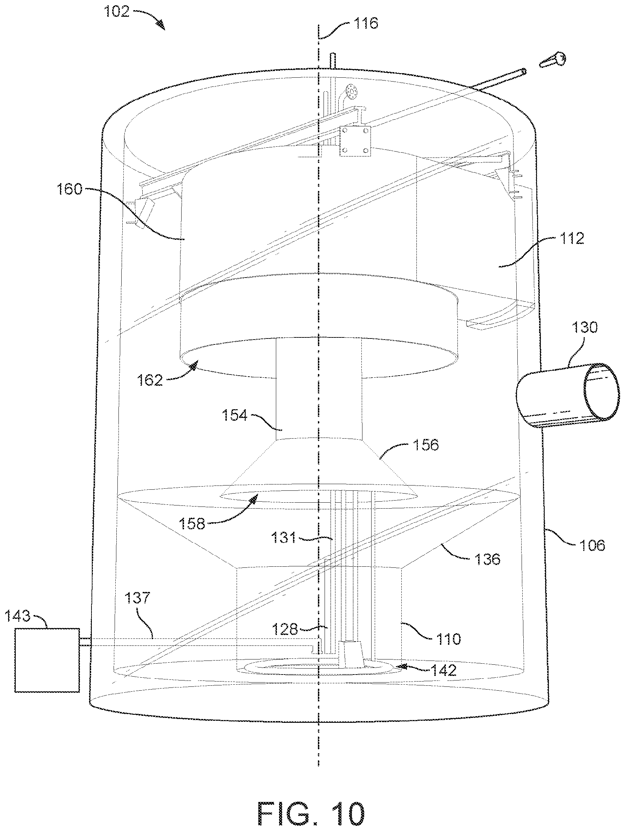

It has been described that the separator comprises a tray assembly disposed within a treatment vessel. However, the separator need not comprise a tray assembly and may instead comprise any form of assembly for the treatment of wastewater. Figure **10** shows an example of an alternative separator 102. The separator 102 comprises a treatment vessel 106, grit pot 110, fluids outlet 112, level sensor 128, inlet 130, support 131, funnel section 136, extraction tube 137, fluidizing apparatus 142 and pump 143 which substantially correspond to the features described previously with respect to Figures 1 to 9. However, the separator 102 of Figure 10 does not feature a tray assembly 4 and instead comprises a central shaft 154 which is provided with a cone 156 at its distal end. The central shaft 154 is in the form of a cylindrical tube, and extends from an upper region of the vessel 106 towards a lower region of the vessel 106 along a separator axis 116. The cone 156 extends from a lower end of the shaft 154 and defines a hollow frustroconical surface. Accordingly, a first passageway 158 is formed by and extends along the interior of the center shaft 154 and the center cone 156. The level sensor 128 is disposed within the grit pot 110 adjacent the centre of the grit pot 110 and the separator axis 116. The level sensor 128 is supported by the support 131 which passes through the first passageway 158 and into the grit pot 110. The separator 102 further comprises a dip plate 160 substantially in the form of a cylindrical tube. The dip plate 160 defines the fluids outlet 112. The center shaft 154 is disposed centrally within the dip plate 160 such that a second passageway 162 having an annular profile extends around the center shaft 154, from a lower portion of the dip plate 160 to the fluids outlet 112.

In use, flow is introduced through the inlet 130. The inlet 130 is positioned tangentially so as to cause a rotational flow around the treatment vessel 106 and the central shaft 154. The flow spirals down the wall of the treatment vessel 106 as solids settle out by gravitational forces and forces created by the rotational flow. Grit contained within the flow collects in the grit pot 110. The central cone 156 simultaneously directs flow away from the grit pot 110, up and around the shaft 154 and within the inside of the dip plate 160 where it exits the vessel 106 via the fluids outlet 112. The upward flow rotates at a slower velocity than the downward flow. The resulting "shear" zone scrubs out finer particles in the fluid.

The remaining operation of the alternative separator 102 corresponds to that of the separator 2 described previously with respect to Figures 1 to 9. The separator 102 may be used in conjunction with a mechanism as described with reference to Figures 8 and 9 in order to withdraw the level sensor for maintenance, repair or any other purpose.

## Claims

1. A wastewater treatment device comprising:
a vessel (6, 106) comprising an inlet (30, 130) for receiving an influent stream;
a separator (2) disposed within the vessel (6, 106);
a grit pot (10, 110) connected to the separator (2);
a level sensor (28) configured to output a signal indicative of the level of grit within the grit pot (10, 110);
one or more fluidizing nozzles (22) disposed within the grit pot (10, 110) and configured to deliver a jet of fluid from a fluid supply to fluidize grit accumulated on the lower surface (41) of the grit pot (10, 110);
an extraction outlet (39) connected to a pump (43) for extracting grit fluidized by the fluidizing nozzles (22); and
a controller in communication with the level sensor (28), **characterized in that** the controller is configured to activate the fluidizing nozzles (22) and the pump (43) based on the signal received from the level sensor (28),
wherein the controller is configured to activate the fluidizing nozzles (22) when the signal is indicative of the level of grit within the grit pot (10, 110) being above a first predetermined threshold level.

2. A wastewater treatment device as claimed in claim 1, wherein the controller is configured to activate the pump (43) after a predetermined period of time has elapsed from activating the fluidizing nozzles (22).

3. A wastewater treatment device as claimed in any preceding claim, wherein the controller is configured to deactivate the fluidizing nozzles (22) and/or the pump (43) when the signal is indicative of the level of grit within the grit pot (10, 110) being below a second predetermined threshold level.

4. A wastewater treatment device as claimed in any preceding claim, wherein the level sensor (28) and/or the extraction outlet (39) are disposed within the grit pot (10, 110).

5. A wastewater treatment device as claimed in any preceding claim, wherein a plurality of fluidizing nozzles (22) are provided which are spaced around a circumference of the grit pot (10, 110).

6. A wastewater treatment device as claimed in claim 5, wherein the plurality of fluidizing nozzles (22) are connected to a ring manifold (38).

7. A wastewater treatment device as claimed in any preceding claim, wherein the fluidizing nozzles (22) are directed towards a centre of the grit pot (10, 110).

8. A wastewater treatment device as claimed in any preceding claim, wherein the fluidizing nozzles (22) are angled towards a lower surface (41) of the grit pot (10, 110).

9. A wastewater treatment device as claimed in any preceding claim, wherein the or each fluidizing nozzle (22) is a flat-fan fluidizing nozzle (22).

10. A wastewater treatment device as claimed in any preceding claim, wherein the extraction outlet (39) is located at or adjacent a centre of the grit pot (10, 110) and above a lower surface (41) of the grit pot (10, 110).

11. A wastewater treatment device as claimed in any preceding claim, wherein the separator (2) comprises a tray assembly (4) connected to the inlet (30, 130), the tray assembly (4) comprising a plurality of nested tray units (14) which define a separator axis (16) and are spaced apart from one another along the separator axis (16), each tray unit (14) comprising:
a substantially conical tray (18) which is aligned along the separator axis (16); and
an aperture (20) in the tray (18) disposed at the separator axis (16) and in communication with the grit pot (10, 110).

## Patentansprüche

1. Abwasserbehandlungsvorrichtung, umfassend:
einen Behälter (6, 106), der einen Einlass (30, 130) zum Aufnehmen eines Zulaufstroms umfasst;
einen in dem Behälter (6, 106) angeordneten Abscheider (2) ;
ein mit dem Abscheider (2) verbundenes Kiesgefäß (10, 110);
einen Füllstandssensor (28), der dazu ausgelegt ist, ein Signal auszugeben, das den Kiesfüllstand in dem Kiesgefäß (10, 110) anzeigt;
eine oder mehrere Fluidisierungsdüsen (22), die in dem Kiesgefäß (10, 110) angeordnet und dazu ausgelegt sind, einen Fluidstrahl aus einer Fluidzufuhr zum Fluidisieren von auf der unteren Oberfläche (41) des Kiesgefäßes (10, 110) angesammeltem Kies zu liefern;
einen mit einer Pumpe (43) verbundenen Entnahmeauslass (39) zum Entnehmen von durch die Fluidisierungsdüsen (22) fluidisiertem Kies; und
eine Steuerung in Kommunikation mit dem Füllstandssensor (28), **dadurch gekennzeichnet, dass** die Steuerung dazu ausgelegt ist, die Fluidisierungsdüsen (22) und die Pumpe (43) basierend auf dem von dem Füllstandssensor (28) empfangenen Signal zu aktivieren,
wobei die Steuerung dazu ausgelegt ist, die Fluidisierungsdüsen (22) zu aktivieren, wenn das Signal anzeigt, dass der Kiesfüllstand in dem Kiesgefäß (10, 110) über einem ersten vorbestimmten Schwellenfüllstand liegt.

2. Abwasserbehandlungsvorrichtung nach Anspruch 1, wobei die Steuerung dazu ausgelegt ist, die Pumpe (43) zu aktivieren, nachdem eine vorbestimmte Zeitdauer ab Aktivieren der Fluidisierungsdüsen (22) vergangen ist.

3. Abwasserbehandlungsvorrichtung nach einem der vorhergehenden Ansprüche, wobei die Steuerung dazu ausgelegt ist, die Fluidisierungsdüsen (22) und/oder die Pumpe (43) zu deaktivieren, wenn das Signal anzeigt, dass der Kiesfüllstand in dem Kiesgefäß (10, 110) unter einem zweiten vorbestimmten Schwellenfüllstand liegt.

4. Abwasserbehandlungsvorrichtung nach einem der vorhergehenden Ansprüche, wobei der Füllstandssensor (28) und/oder der Entnahmeauslass (39) in dem Kiesgefäß (10, 110) angeordnet sind.

5. Abwasserbehandlungsvorrichtung nach einem der vorhergehenden Ansprüche, wobei eine Mehrzahl von Fluidisierungsdüsen (22) bereitgestellt ist, die um einen Umfang des Kiesgefäßes (10, 110) beabstandet sind.

6. Abwasserbehandlungsvorrichtung nach Anspruch 5, wobei die Mehrzahl von Fluidisierungsdüsen (22) mit einem Ringverteiler (38) verbunden ist.

7. Abwasserbehandlungsvorrichtung nach einem der vorhergehenden Ansprüche, wobei die Fluidisierungsdüsen (22) hin zu einer Mitte des Kiesgefäßes (10, 110) gerichtet sind.

8. Abwasserbehandlungsvorrichtung nach einem der vorhergehenden Ansprüche, wobei die Fluidisierungsdüsen (22) hin zu einer Unterseite (41) des Kiesgefäßes (10, 110) abgewinkelt sind.

9. Abwasserbehandlungsvorrichtung nach einem der vorhergehenden Ansprüche, wobei die oder jede Fluidisierungsdüse (22) eine Flachstrahl-Fluidisierungsdüse (22) ist.

10. Abwasserbehandlungsvorrichtung nach einem der vorhergehenden Ansprüche, wobei der Entnahmeauslass (39) an oder angrenzend an eine Mitte des Kiesgefäßes (10, 110) und über einer unteren Oberfläche (41) des Kiesgefäßes (10, 110) angeordnet ist.

11. Abwasserbehandlungsvorrichtung nach einem der vorhergehenden Ansprüche, wobei der Abscheider (2) eine mit dem Einlass (30, 130) verbundene Wannenanordnung (4) umfasst, wobei die Wannenanordnung (4) eine Mehrzahl von ineinander geschachtelten Wanneneinheiten (14) umfasst, die eine Abscheiderachse (16) definieren und entlang der Abscheiderachse (16) voneinander beabstandet sind, wobei jede Wanneneinheit (14) Folgendes umfasst:
eine im Wesentlichen konische Wanne (18), die entlang der Abscheiderachse (16) ausgerichtet ist; und
eine Öffnung (20) in der Wanne (18), die an der Abscheiderachse (16) angeordnet ist und in Kommunikation mit dem Kiesgefäß (10, 110) steht.

## Revendications

1. Dispositif de traitement d'eaux usées comportant :
un récipient (6, 106) comportant une entrée (30, 130) destinée à recevoir un flux affluent ;
un séparateur (2) disposé à l'intérieur du récipient (6, 106) ;
un pot (10, 110) à sable relié au séparateur (2) ;
un capteur (28) de niveau configuré pour délivrer un signal indicatif du niveau de sable à l'intérieur du pot (10, 110) à sable ;
une ou plusieurs buses (22) de fluidisation disposées à l'intérieur du pot (10, 110) à sable et configurées pour distribuer un jet de fluide provenant d'une alimentation en fluide afin de fluidiser du sable accumulé sur la surface inférieure (41) du pot (10, 110) à sable ;
une sortie (39) d'extraction reliée à une pompe (43) servant à extraire du sable fluidisé par les buses (22) de fluidisation ; et
un moyen de commande en communication avec le capteur (28) de niveau, **caractérisé en ce que** le moyen de commande est configuré pour activer les buses (22) de fluidisation et la pompe (43) sur la base du signal reçu en provenance du capteur (28) de niveau,
le moyen de commande étant configuré pour activer les buses (22) de fluidisation lorsque le signal est indicatif du fait que le niveau de sable à l'intérieur du pot (10, 110) à sable se trouve au-dessus d'un premier niveau seuil prédéterminé.

2. Dispositif de traitement d'eaux usées selon la revendication 1, le moyen de commande étant configuré pour activer la pompe (43) après qu'un laps de temps prédéterminé s'est écoulé depuis l'activation des buses (22) de fluidisation.

3. Dispositif de traitement d'eaux usées selon l'une quelconque des revendications précédentes, le moyen de commande étant configuré pour désactiver les buses (22) de fluidisation et/ou la pompe (43) lorsque le signal est indicatif du fait que le niveau de sable à l'intérieur du pot (10, 110) à sable se trouve au-dessous d'un second niveau seuil prédéterminé.

4. Dispositif de traitement d'eaux usées selon l'une quelconque des revendications précédentes, le capteur (28) de niveau et/ou la sortie (39) d'extraction étant disposés à l'intérieur du pot (10, 110) à sable.

5. Dispositif de traitement d'eaux usées selon l'une quelconque des revendications précédentes, une pluralité de buses (22) de fluidisation étant mise en place, qui sont espacées autour d'une circonférence du pot (10, 110) à sable.

6. Dispositif de traitement d'eaux usées selon la revendication 5, la pluralité de buses (22) de fluidisation étant reliée à un collecteur (38) en anneau.

7. Dispositif de traitement d'eaux usées selon l'une quelconque des revendications précédentes, les buses (22) de fluidisation étant dirigées vers un centre du pot (10, 110) à sable.

8. Dispositif de traitement d'eaux usées selon l'une quelconque des revendications précédentes, les buses (22) de fluidisation étant inclinées vers une surface inférieure (41) du pot (10, 110) à sable.

9. Dispositif de traitement d'eaux usées selon l'une quelconque des revendications précédentes, la ou chaque buse (22) de fluidisation étant une buse (22) de fluidisation à jet plat.

10. Dispositif de traitement d'eaux usées selon l'une quelconque des revendications précédentes, la sortie (39) d'extraction étant située au niveau ou au voisinage d'un centre du pot (10, 110) à sable et au-dessus d'une surface inférieure (41) du pot (10, 110) à sable.

11. Dispositif de traitement d'eaux usées selon l'une quelconque des revendications précédentes, le séparateur (2) comportant un ensemble (4) de bacs relié à l'entrée (30, 130), l'ensemble (4) de bacs comportant une pluralité d'unités (14) de bacs emboîtées qui définissent un axe (16) de séparateur et sont espacées les unes par rapport aux autres le long de l'axe (16) de séparateur, chaque unité (14) de bac comportant :
un bac (18) sensiblement conique qui est aligné suivant l'axe (16) de séparateur ; et
une ouverture (20) dans le bac (18), disposée au niveau de l'axe (16) de séparateur et en communication avec le pot (10, 110) à sable.
